# EUROPÄISCHE PATENTSCHRIFT

(11) **EP 3 531 628 B1**
(45) Veröffentlichungstag und Bekanntmachung des Hinweises auf die Patenterteilung: **26.02.2020**
(21) Anmeldenummer: 18213888.3
(22) Anmeldetag: 19.12.2018
(51) Int. Cl.: H04L 12/40, G06F 13/00

(54) **KOMMUNIKATIONSMODUL SOWIE VERFAHREN ZUM BETREIBEN EINES SOLCHEN KOMMUNIKATIONSMODULS**
COMMUNICATION MODULE AND METHOD FOR OPERATING SUCH A COMMUNICATION MODULE
MODULE DE COMMUNICATION AINSI QUE PROCÉDÉ DE FONCTIONNEMENT D'UN TEL MODULE DE COMMUNICATION

(30) Priorität: 26.02.2018 DE 102018104226
(43) Veröffentlichungstag der Anmeldung: 28.08.2019
(73) Patentinhaber: Insta GmbH, 58509 Lüdenscheid (DE)
(72) Erfinder: Stecura, Darius, 45731 Waltrop (DE); Großen, Thomas, 58239 Schwerte (DE); Reth, Karsten, 58300 Wetter (DE); Rosemann, Peter, 58091 Hagen (DE)

(56) Entgegenhaltungen:
- US-A1- 2011 066 765
- US-A1- 2017 249 248

## Beschreibung

Die Erfindung betrifft einen als Aktor oder Sensor ausgelegten Netzwerkteilnehmer eines Gebäudeinstallationsnetzwerkes mit einem Kommunikationsmodul, welches Kommunikationsmodul eine Kommunikationsschnittstelle und eine Prozessoreinheit mit einem Prozessor und mit einem als flüchtigen Speicher ausgelegten Arbeitsspeicher umfasst. Des Weiteren betrifft die Erfindung ein Verfahren zum Betreiben eines Netzwerkteilnehmers mit einem solchen Kommunikationsmodul eines Gebäudeinstallationsnetzwerkes, bei welchem Verfahren in einem als flüchtigen Speicher ausgelegten Arbeitsspeicher die Kommunikation anderer Netzwerkteilnehmer mit dem Kommunikationsmodul protokolliert wird, indem zu jedem empfangenen Telegramm ein Protokolleintrag gespeichert wird.

Netzwerkteilnehmer eines Gebäudeinstallationsnetzwerkes sind insbesondere Sensoren oder Aktoren. Damit diese über das Datennetzwerk miteinander kommunizieren können, verfügt jeder Netzwerkteilnehmer über ein Kommunikationsmodul. Ein solches Kommunikationsmodul umfasst neben der physischen Schnittstelle zu dem typischerweise als Bus-System ausgelegten Datennetzwerk eine Prozessoreinheit und ist an die Stromversorgung des Netzteilnehmers angeschlossen. Die Prozessoreinheit verfügt über einen Prozessor und einen Arbeitsspeicher, der als flüchtiger Speicher ausgelegt ist. Das Kommunikationsmodul erhält den für seinen Betrieb notwendigen Strom über diejenige Stromversorgung, die für den Betrieb des Aktors oder Sensors zur Verfügung steht, somit beispielsweise über das Stromnetz. Eine Stromversorgung kann auch über das Bus-System erfolgen. Netzwerkteilnehmer können auch batteriebetrieben sein, dann wird das Kommunikationsmodul mit dem in einer solchen Batterie gespeicherten Strom betrieben.

Im Rahmen der Kommunikation zwischen einzelnen Netzwerkteilnehmern wird von jedem Netzwerkteilnehmer protokolliert, von wem er ein Datentelegramm empfangen hat. Diese Protokollierung wird bei Fehleruntersuchungen oder auch für sicherheitstechnische Aspekte benötigt. Problematisch ist bei dieser Protokollierung, dass im Falle einer Stromunterbrechung, sei es bei einer gewollten Stromunterbrechung durch Ausschalten des Netzwerkteilnehmers oder durch eine nicht gewollte Stromunterbrechung im Versorgungsnetz oder eine nicht mehr den notwendigen Betriebsstrom bereitstellende Batterie diese Protokolleinträge verloren gehen. Steigende Sicherheitsanforderungen an die Aufzeichnung des Datenverkehrs in einem solchen Datennetzwerk machen es erforderlich, dass die Protokolleinträge über empfangene Datentelegramme von zur Kommunikation mit dem Netzwerkteilnehmer autorisierter anderer Netzwerkteilnehmer auch bei einer Stromunterbrechung nicht verloren gehen. Zudem wäre es wünschenswert, wenn die Länge der Protokolleinträge aus sicherheitstechnischen Aspekten vergrößert werden könnte, ohne dass hierfür leistungsfähigere Prozessoren oder größerer Arbeitsspeicher benötigt werden. Die diesbezüglichen Ressourcen in dem Kommunikationsmodul eines Netzwerkteilnehmers eines Gebäudeinstallationsnetzwerkes sind aus Kostengründen begrenzt.

Aus US 2017/0249248 A1 ist ein Datensicherungssystem bekannt, welches eine Vielzahl von als Server ausgebildete Knoten aufweist. Dabei kann im Falle eines Stromausfalles unter Zuhilfenahme eines Notstromspeichers ein Transfer von einem Server auf einen anderen Server erfolgen.

US 2011/0066765 A1 offenbart einen Speichercontroller, der einen Datentransfer zwischen einem permanenten und einen flüchtigen Speicher steuert. Dabei wird, sofern das Auslesen der Daten eines ersten flüchtigen Speichers vollzogen worden ist, der Speicherinhalt des flüchtigen Speichers auf den permanenten Speicher übertragen.

Ausgehend von diesem diskutierten Stand der Technik liegt der Erfindung daher die Aufgabe zugrunde, ein eingangs genanntes Kommunikationsmodul für einen solchen Netzwerkteilnehmer sowie ein eingangs genanntes Verfahren jeweils dergestalt weiterzubilden, dass ohne nennenswerte Vergrößerung der eingesetzten Ressourcen den vorstehenden Anforderungen Genüge getan wird.

Gelöst wird die vorrichtungsbezogene Aufgabe durch ein eingangs genanntes, gattungsgemäßes Kommunikationsmodul, bei dem an die Prozessoreinheit ein externer, nicht flüchtiger Speicherbaustein mit einem sehr viel höheren Speichervolumen verglichen mit demjenigen des Arbeitsspeichers angeschlossen ist, auf den die Prozessoreinheit Zugriff hat, wobei die Anzahl der Protokolleinträge in dem Arbeitsspeicher begrenzt ist und bei dem das Kommunikationsmodul einen die Prozessoreinheit und den externen Speicherbaustein mit Strom versorgenden Notstromspeicher aufweist, dessen Ladekapazität für einen Speicherbetrieb von Prozessoreinheit und externem Speicherbaustein zum Speichern von Einträgen aus dem flüchtigen Arbeitsspeicher in den externen Speicherbaustein ausreicht.

Die verfahrensbezogene Aufgabe wird durch ein eingangs genanntes, gattungsgemäßes Verfahren gelöst, bei dem
- bei einer Einrichtung des Kommunikationsmoduls die Anzahl der in dem Arbeitsspeicher speicherbaren Protokolleinträge auf eine bestimmte Anzahl begrenzt wird,
- nach Erreichen der Maximalanzahl an Protokolleinträgen zumindest der älteste Protokolleintrag aus dem Arbeitsspeicher in einen, nicht flüchtigen Speicherbaustein umgespeichert wird und
- bei einer Unterbrechung der Stromversorgung des Kommunikationsmoduls oder einem unvorhergesehenen Reset des Kommunikationsmoduls dieses durch einen Notstromspeicher begrenzter Kapazität weiterhin mit Energie so lange versorgt wird, um alle Protokolleinträge aus dem Arbeitsspeicher in den nicht flüchtigen Speicherbaustein umzuspeichern.

Sowohl der beanspruchte Netzwerkteilnehmer als auch das Verfahren zum Betreiben eines solchen Netzwerkteilnehmers setzen einen externen, nicht flüchtigen Speicherbaustein ein, mithin einen Speicherbaustein, der nicht nur nicht flüchtig ist, sondern der auch erheblich günstiger ist als ein der Prozessoreinheit zugehöriger Datenspeicher. Die Prozessoreinheit steht mit dem externen Speicherbaustein für einen Datenaustausch in Verbindung. In einem Ausführungsbeispiel ist vorgesehen, den externen Speicherbaustein auf derselben Leiterplatte wie die Prozessoreinheit anzuordnen.

Dieses Konzept ermöglicht, den der Prozessoreinheit zugehörigen Arbeitsspeicher hinsichtlich seines Speicherumfanges klein zu halten. Jedenfalls braucht die Speicherkapazität nicht größer als herkömmlich erforderlich zu sein, um dennoch dem durch die erhöhten Sicherheitsanforderungen benötigten höheren Speichervolumen zu genügen. In geschickter Weise wird die Speicherkapazität des flüchtigen Arbeitsspeichers mit derjenigen des externen Speicherbausteins verknüpft. Für die Protokollierung der empfangenen Datentelegramme wird in dem Arbeitsspeicher die Eintragung nur einer bestimmten, durchaus geringen Anzahl an Protokolleinträgen ermöglicht. Die Anzahl der zugelassenen Protokolleinträge kann in Abhängigkeit von dem für die Ablage von Protokolleinträgen in dem Arbeitsspeicher zur Verfügung stehenden Speicherkapazität eingerichtet werden. Beispielsweise kann der Arbeitsspeicher eingerichtet werden, um 50, 75 oder 100 Protokolleinträge zu gestatten. Um die Protokollhistorie über die Anzahl der im Arbeitsspeicher vorgesehenen Protokolleinträge fortführen zu können, wird, wenn alle Speicherplätze für die Ablage der Protokolleinträge im Arbeitsspeicher vergeben sind, zumindest der zeitlich älteste Protokolleintrag in den externen Speicherbaustein umgespeichert, wodurch zumindest das Speichervolumen für einen Protokolleintrag in dem Arbeitsspeicher freigegeben ist. Durchaus können bei Erreichen der zugelassenen Maximalanzahl an Protokolleinträgen in einem solchen Schritt auch mehrere, zeitlich aufeinanderfolgende Protokolleinträge oder auch alle in dem Arbeitsspeicher vorhandenen Protokolleinträge in den externen Speicherbaustein umgespeichert werden. Entsprechend größer ist der dann freigegebene Bereich in dem Arbeitsspeicher. Der externe Speicherbaustein hat verglichen mit dem Arbeitsspeicher ein sehr viel höheres Speichervolumen. In dem externen Speicherbaustein werden die umgespeicherten Protokolleinträge aggregiert, so dass eine Historie über längere Zeiträume hinweg darin gespeichert werden kann. Da es sich bei diesem externen Speicherbaustein um einen nicht flüchtigen Speicherbaustein, beispielsweise einen Flash-EEPROM handelt, bleiben die darin gespeicherten Daten auch bei einer Stromunterbrechung erhalten. Somit wird durch diese Maßnahme die Möglichkeit geschaffen, die Kommunikationshistorie auch über längere Zeiträume dokumentieren zu können.

Damit bei einer Stromunterbrechung die in dem flüchtigen Arbeitsspeicher der Prozessoreinheit vorhandenen Protokolleinträge nicht verloren gehen, verfügt das Kommunikationsmodul über einen Notstromspeicher. Dieser stellt den notwendigen Strom für die Prozessoreinheit und den externen Speicherbaustein zur Verfügung, um im Falle einer Stromunterbrechung die in dem Arbeitsspeicher befindlichen Protokolleinträge in den externen Speicherbaustein zu übertragen und dort zu speichern, typischerweise in derselben Art und Weise wie das Umspeichern im Normalbetrieb vorgenommen wird. Durch die Begrenzung der Anzahl der Protokolleinträge in dem Arbeitsspeicher wird das maximal zu übertragende Datenvolumen von dem Arbeitsspeicher in den externen Speicherbaustein begrenzt, so dass für den Vorgang des Übertragens von in dem Arbeitsspeicher vorhandener Protokolleinträge im Falle einer Stromunterbrechung in den externen Speicherbaustein Strom nur für eine kurze Zeit zur Verfügung gestellt werden muss. Aufgrund der vorbeschriebenen Auslegung des Kommunikationsmoduls kann als Notstromspeicher ein Kondensator oder auch eine Kondensatoranordnung eingesetzt werden. Mithin kann der Notstromspeicher durch ein sehr kostengünstiges elektronisches Bauteil - den Kondensator - zur Verfügung gestellt werden. Ausgenutzt wird bei einer solchen Auslegung des Kommunikationsmoduls auch, dass für den Prozess des Umspeicherns von dem flüchtigen Arbeitsspeicher der Prozessoreinheit in den externen Speicherbaustein nur ein minimaler Strom benötigt wird. Strom wird aus dem Kondensator nur bei einer Spannungsunterbrechung abgezogen, so dass dieser im Normalbetrieb aufgeladen ist.

Nach einer Stromversorgungsunterbrechung oder einem unvorhergesehenen Reset, was zu einer Speicherung der in dem Arbeitsspeicher der Prozessoreinheit befindlichen Protokolleinträge in den nicht flüchtigen Speicherbaustein zur Folge hatte, werden bei erneuter Inbetriebnahme des Kommunikationsmoduls und somit beim Hochfahren desselben die aus dem Arbeitsspeicher in den nicht flüchtigen Speicherbaustein gesicherten Protokolleinträge wieder in den Arbeitsspeicher geschrieben. Das Kommunikationsmodul arbeitet dann mit den in dem Arbeitsspeicher der Prozessoreinheit befindlichen Protokolleinträgen weiter, die vor der Stromversorgungsunterbrechung oder dem unvorhergesehenen Reset darin abgelegt waren. Auf diese Weise bleibt die Protokollhistorie vollständig.

Das Vorsehen des externen Speicherbausteins mit seinem kostengünstigen größeren Speichervolumen kann zudem genutzt werden, um darin - ebenfalls zur Erhöhung der Kommunikationssicherheit im Datennetzwerk - eine Liste derjenigen Netzwerkteilnehmer abzulegen, die autorisiert sind, Datentelegramme an den Netzteilnehmer zu senden. Bei einer solchen Auslegung des Kommunikationsmoduls wird in einem ersten Schritt nach Empfang eines Datentelegrammes kontrolliert, ob die in dem Datentelegramm enthaltene Absenderkennung von einem solchen Netzwerkteilnehmer stammt, der zur Kommunikation mit dem Netzwerkteilnehmer autorisiert ist. Ist das empfangene Datenprotokoll von einem nicht autorisierten Gerät, was durchaus auch ein Netzwerkteilnehmer sein kann, gesendet worden, spricht das Kommunikationsmodul und damit dieser Netzwerkteilnehmer auf das empfangene Datentelegramm nicht an. Auch wird in einem solchen Fall typischerweise kein Protokolleintrag in dem Arbeitsspeicher vorgenommen.

Die physische Kommunikationsschnittstelle des Kommunikationsmoduls kann eingerichtet sein, um an ein beliebiges Datennetzwerk, beispielsweise auch eines Gebäudeinstallationsnetzwerkes, wie KNX, KNX-RF oder eNet angeschlossen zu werden. Der Prozessoreinheit ist typischerweise neben ihrem flüchtigen Arbeitsspeicher auch ein nicht flüchtiger interner Speicher zugehörig. In diesem ist die zum Betreiben des Kommunikationsmoduls benötigte Betriebssoftware abgelegt. Das Speichervolumen des nicht flüchtigen internen Speichers kann vor dem Hintergrund des vorhandenen externen Speicherbausteins ebenfalls klein gehalten werden. Nicht flüchtiges internes Speichervolumen ist um ein Vielfaches teurer als die Bereitstellung desselben Speichervolumens in einem externen Speicherbaustein.

In einem Datennetzwerk sind typischerweise sämtliche Teilnehmer mit einem Kommunikationsmodul ausgestattet, das die vorbeschriebene Funktionalität aufweist.

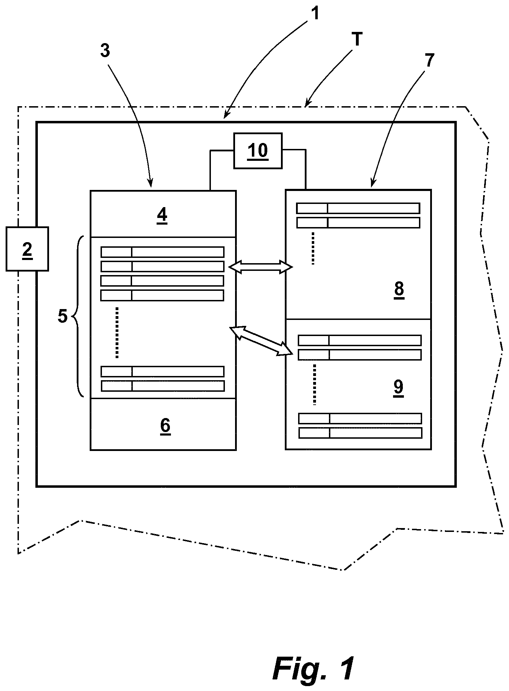

Nachfolgend ist die Erfindung anhand eines Ausführungsbeispiels unter Bezugnahme auf die beigefügte **Figur 1** beschrieben.

Figur 1 zeigt ein schematisiertes Blockschaltbild eines Kommunikationsmoduls 1 eines im Übrigen nicht näher dargestellten Netzwerkteilnehmers T eines Gebäudeinstallationsnetzwerkes. Das Kommunikationsmodul 1 kann dasjenige eines Sensors oder eines Aktors sein. Das Kommunikationsmodul 1 ist mittels einer physischen Kommunikationsschnittstelle 2, mit der das Kommunikationsmodul 1 an ein Datennetzwerk, bei dem es sich im vorliegenden Fall um ein Gebäudeinstallationsdatennetzwerk handelt, anschließbar. Die Kommunikationsschnittstelle 2 des dargestellten Ausführungsbeispiels ist als KNX-Schnittstelle ausgeführt.

Das Kommunikationsmodul 1 umfasst eine Prozessoreinheit 3 mit einem Prozessor 4, dem ein RAM-Speicher als flüchtiger Arbeitsspeicher 5 zugeordnet ist. Teil der Prozessoreinheit 3 des dargestellten Ausführungsbeispiels ist ebenfalls ein nicht flüchtiger interner Speicher 6. In diesem befindet sich die Betriebssoftware zum Betreiben des Kommunikationsmoduls 1. Das Kommunikationsmodul 1 verfügt des Weiteren über einen auf derselben Leiterplatte wie die Prozessoreinheit 3 angeordneten, externen, nicht flüchtigen Speicherbaustein 7, der bei dem dargestellten Ausführungsbeispiel als Flash-EEPROM ausgeführt ist. Der externe Speicherbaustein 7 umfasst bei dem dargestellten Ausführungsbeispiel ein erstes Speichersegment 8 und ein zweites Speichersegment 9. In nicht dargestellter Art und Weise ist die Prozessoreinheit 3 zum Austausch von Daten an den externen Speicherbaustein 7 angeschlossen. In ebenfalls nicht näher dargestellter Art und Weise ist das Kommunikationsmodul 1 an die Stromversorgung des Netzwerkteilnehmers T angeschlossen. Das Kommunikationsmodul 1 verfügt neben der vorbeschriebenen Stromversorgung über einen Notstromspeicher 10, der bei dem dargestellten Ausführungsbeispiel ein Kondensator ist. Der Kondensator ist zur Stromversorgung der Prozessoreinheit 3 und des externen Speicherbausteins 7 angeschlossen.

Eingerichtet wird der flüchtige Arbeitsspeicher 5, dass in diesem eine gewisse Anzahl an Kommunikationsprotokolleinträgen gespeichert werden können. Diese Einträge setzen sich typischerweise aus einer Senderadresse und einer Sequenznummer zusammen. In einer anderen Ausgestaltung wird lediglich die Sequenznummer empfangener Telegramme in dem flüchtigen Arbeitsspeicher 5 abgelegt. Bei dem dargestellten Ausführungsbeispiel ist der flüchtige Arbeitsspeicher 5 eingerichtet, damit darin 100 Protokolleinträge abgelegt werden können.

In dem zweiten Speichersegment 9 des externen Speicherbausteins 7 sind diejenigen Absenderkennungen von denjenigen Netzwerkteilnehmern hinterlegt, die ein Datentelegramm an den Netzwerkteilnehmer T mit dem Kommunikationsmodul 1 senden bzw. mit diesem kommunizieren dürfen, mithin entsprechend autorisiert sind. Bei dem dargestellten Ausführungsbeispiel kann die diesbezügliche Tabelle über 5000 Einträge verfügen.

Wird über die Kommunikationsschnittstelle 2 ein Datentelegramm von dem Kommunikationsmodul 1 empfangen, wird in einem ersten Schritt überprüft, ob der sendende Netzwerkteilnehmer autorisiert ist, mit diesem Kommunikationsmodul 1 zu kommunizieren. Zu diesem Zweck wird die aus der Senderadresse und der Sequenznummer empfangene Absenderkennung zunächst mit den in dem Arbeitsspeicher 5 vorhandenen Absenderkennungen in den Protokolleinträgen verglichen. Ein Protokolleintrag erfolgt nur dann, wenn der Sender des empfangenen Datentelegramms berechtigt ist, mit dem Kommunikationsmodul 1 zu kommunizieren. Befindet sich die Absenderkennung in einem Protokolleintrag des Arbeitsspeichers 5, wird zu dem empfangenen Datentelegram ein Protokolleintrag in den Arbeitsspeicher abgelegt. Befindet sich die Absenderkennung nicht in einem Protokolleintrag des Arbeitsspeichers 5, wird die empfangene Absenderkennung mit den in dem zweiten Speichersegment 9 des externen Speicherbausteins 7 als autorisierte Sender abgelegten Kennungen verglichen. Nur wenn die Absenderkennung in den Einträgen des zweiten Speichersegmentes 9 enthalten ist, wird das mit dieser Absenderkennung empfangene Datentelegramm weiterverarbeitet. In einem solchen Fall wird bei dem dargestellten Ausführungsbeispiel in dem flüchtigen Arbeitsspeicher 5 ein Protokolleintrag vorgenommen. Dieser Vorgang wiederholt sich mit dem Empfang jedes Datentelegramms, das von einem autorisierten Sender abgesetzt worden ist. Sind sämtliche Speicherplätze für die Protokolleinträge - hier: 100 - in dem Arbeitsspeicher 5 beschrieben, wird der zeitlich älteste Protokolleintrag aus dem flüchtigen Arbeitsspeicher 5 in das zweite Speichersegment 9 des externen Speicherbausteins 7 umgespeichert, um in dem Arbeitsspeicher 5 einen Speicherplatz für einen neuen Protokolleintrag freizugeben. Auf diese Weise wird mit jedem weiteren Empfang eines Datentelegrammes eines autorisierten Absenders ein weiterer Protokolleintrag in den externen Speicherbaustein 7 umgespeichert. In dem zweiten Speichersegment 9 des externen Speicherbausteins 7 akkumulieren sukzessive die Protokolleinträge. Die Anzahl der Protokolleinträge ist in dem externen Speicherbaustein 7 auf eine bestimmte Anzahl begrenzt, vielleicht 5000 oder 10000 Einträge. Die ältesten dieser Protokolleinträge liegen dann so weit zeitlich zurück, dass sie für sicherheitstechnische Überprüfungen oder bei einer Fehlersuche nicht mehr von Relevanz sind. Sind diese Speicherplätze belegt, wird bei dem beschriebenen Ausführungsbeispiel mit dem Vorgang des Umspeicherns eines Protokolleintrages aus dem flüchtigen Arbeitsspeicher 5 in das zweite Speichersegment 9 der jeweils älteste Protokolleintrag gelöscht.

Im Falle einer Stromunterbrechung, beispielsweise eines Stromausfalls werden die Prozessoreinheit 3 und der externe Speicherbaustein 7 durch den Kondensator als Notstromspeicher 10 noch so lange mit Strom versorgt, dass die in dem Arbeitsspeicher 5 der Prozessoreinheit 3 abgelegten Protokolleinträge in das erste Speichersegment 8 des externen Speicherbausteins 7 umgespeichert werden können. Hierfür wird nur ein minimaler Strom benötigt, weshalb es sich bei dem als Kondensator ausgeführten Notstromspeicher 10 um kein kostenträchtiges Bauteil handelt. Sichergestellt ist durch diese Maßnahme, dass die Protokolleinträge insgesamt dann in einem nicht flüchtigen Speicher abgelegt sind und somit die für höhere Sicherheitsanforderungen benötigte Protokolleintraghistorie unbeeinflusst von einer Stromunterbrechung erhalten bleibt.

Wird nach einer Stromunterbrechung das Kommunikationsmodul 1 wieder in Betrieb genommen, beispielsweise deshalb, da die Stromunterbrechung nicht mehr vorliegt, werden beim Hochfahren des Kommunikationsmoduls 1 die in dem ersten Speichersegment 8 gesicherten Protokolleinträge in den flüchtigen Arbeitsspeicher 5 der Prozessoreinheit 3 geladen. Ein Betrieb des Kommunikationsmoduls 1 wird bezüglich der in dem Arbeitsspeicher 5 dann befindlichen Protokolleinträge exakt mit dem Stand fortgesetzt, der vor der Stromunterbrechung in Form von Protokolleinträgen in dem Arbeitsspeicher 5 vorhanden war. Auf diese Weise ist trotz Stromunterbrechung die Protokollhistorie nicht unterbrochen.

Bei dem beschriebenen Kommunikationsmodul ist dessen Funktionalität gegenüber herkömmlichen Kommunikationsmodulen der in Rede stehenden Art in Bezug auf sicherheitsrelevante Aspekte durch das Vorsehen eines externen Speicherbausteins 7 und eines Notstromspeichers 10 in einer kostenoptimierten Ausgestaltung bereitgestellt.

### Bezugszeichenliste

- 1: Kommunikationsmodul
- 2: Kommunikationsschnittstelle
- 3: Prozessoreinheit
- 4: Prozessor
- 5: flüchtiger Arbeitsspeicher
- 6: nicht flüchtiger interner Speicher
- 7: nicht flüchtiger externer Speicherbaustein
- 8: erstes Speichersegment
- 9: zweites Speichersegment
- 10: Notstromspeicher

- T: Netzwerkteilnehmer

## Patentansprüche

1. Netzwerkteilnehmer (T) eines Gebäudeinstallationsnetzwerkes, umfassend ein Kommunikationsmodul (1), wobei der Netzwerkteilnehmer ein Sensor oder ein Aktor ist, wobei das Kommunikationsmodul (1) eine Kommunikationsschnittstelle (2) und eine Prozessoreinheit (3) mit einem Prozessor (4) und mit einem als flüchtigen Speicher ausgelegten Arbeitsspeicher (5) umfasst, **dadurch gekennzeichnet, dass** an die Prozessoreinheit (3) ein externer, nicht flüchtiger Speicherbaustein (7) mit einem sehr viel höheren Speichervolumen verglichen mit demjenigen des Arbeitsspeichers (5) angeschlossen ist, auf den die Prozessoreinheit (3) Zugriff hat, dass die Anzahl der Protokolleinträge in dem Arbeitsspeicher (5) begrenzt ist, und dass das Kommunikationsmodul (1) einen die Prozessoreinheit (3) und den externen Speicherbaustein (7) mit Strom versorgenden Notstromspeicher (10) aufweist, dessen Ladekapazität für einen Speicherbetrieb von Prozessoreinheit (3) und externem Speicherbaustein (7) zum Speichern von Einträgen aus dem flüchtigen Arbeitsspeicher (5) in den externen Speicherbaustein (7) ausreicht.

2. Netzwerkteilnehmer nach Anspruch 1, **dadurch gekennzeichnet, dass** der Arbeitsspeicher (5) ein RAM ist.

3. Netzwerkteilnehmer nach Anspruch 1 oder 2, **dadurch gekennzeichnet, dass** der externe Speicherbaustein (7) ein Flash-Speicherbaustein, etwa ein Flash-EEPROM ist.

4. Netzwerkteilnehmer nach einem der Ansprüche 1 bis 3, **dadurch gekennzeichnet, dass** der Stromspeicher (10) ein Kondensator oder eine Kondensatoranordnung ist.

5. Netzwerkteilnehmer nach einem der Ansprüche 1 bis 4, **dadurch gekennzeichnet, dass** in einem ersten Speichersegment (8) des externen Speicherbausteins (7) Einträge aus dem Arbeitsspeicher (5) der Prozessoreinheit (3) und in einem zweiten Speichersegment (9) eine Liste derjenigen Netzwerkteilnehmer des Datennetzwerkes gespeichert ist, die autorisiert sind, mit dem Kommunikationsmodul (1) zu kommunizieren.

6. Netzwerkteilnehmer nach einem der Ansprüche 1 bis 5, **dadurch gekennzeichnet, dass** die Kommunikationsschnittstelle (2) eine Schnittstelle zu einem Gebäudeinstallationsnetzwerk, etwa eine KNX-Schnittstelle ist.

7. Netzwerkteilnehmer nach einem der Ansprüche 1 bis 6, **dadurch gekennzeichnet, dass** der externe Speicherbaustein (7) auf derselben Leiterplatte wie die Prozessoreinheit (3) angeordnet ist.

8. Verfahren zum Betreiben eines Netzwerkteilnehmers (T) nach einem der Ansprüche 1 bis 7, bei welchem Verfahren in einem als flüchtigen Speicher ausgelegten Arbeitsspeicher (5) die Kommunikation anderer Netzwerkteilnehmer mit dem Kommunikationsmodul (1) des Netzwerkteilnehmers protokolliert wird, indem zu jedem empfangenen Telegramm ein Protokolleintrag gespeichert wird, **dadurch gekennzeichnet, dass**
- bei einer Einrichtung des Kommunikationsmoduls (1) die Anzahl der in dem Arbeitsspeicher (5) speicherbaren Protokolleinträge auf eine bestimmte Anzahl begrenzt wird,
- nach Erreichen der Maximalanzahl an Protokolleinträgen zumindest der älteste Protokolleintrag aus dem Arbeitsspeicher (5) in einen nicht flüchtigen Speicherbaustein (7) umgespeichert wird und
- bei einer Unterbrechung der Stromversorgung des Kommunikationsmoduls (1) oder einem unvorhergesehenen Reset des Kommunikationsmoduls (1) dieses durch einen Notstromspeicher (10) begrenzter Kapazität weiterhin mit Energie so lange versorgt wird, um alle Protokolleinträge aus dem Arbeitsspeicher (5) in den nicht flüchtigen Speicherbaustein (7) umzuspeichern.

9. Verfahren nach Anspruch 8, **dadurch gekennzeichnet, dass** die Protokolleinträge aus dem Arbeitsspeicher (5) in einen externen, nicht flüchtigen Speicherbaustein (7) umgespeichert werden.

10. Verfahren nach Anspruch 8 oder 9, **dadurch gekennzeichnet, dass** bei erneuter Inbetriebnahme des Kommunikationsmoduls (1) nach einer Unterbrechung der Stromversorgung oder einem unvorhergesehenen Reset die in dem externen, nicht flüchtigen Speicherbaustein (7) aus dem Arbeitsspeicher (5) gespeicherten Protokolleinträge in den Arbeitsspeicher (5) der Prozessoreinheit (3) geladen werden.

11. Verfahren nach einem der Ansprüche 8 bis 10, **dadurch gekennzeichnet, dass** die maximale Anzahl der Protokolleinträge in dem nicht flüchtigen Speicherbaustein (7) begrenzt ist, wobei die maximale Anzahl dieser Protokolleinträge um ein Vielfaches größer ist als die maximal zugelassene Anzahl an Protokolleinträgen in dem Arbeitsspeicher (5), und dass bei Erreichen der Maximalanzahl an Protokolleinträgen in dem Speicherbaustein (7) zumindest der älteste Protokolleintrag gelöscht oder in einem weiteren, außerhalb des Netzwerkteilnehmers (T) befindlichen Speicher umgespeichert wird.

12. Verfahren nach einem der Ansprüche 8 bis 11, **dadurch gekennzeichnet, dass** bei Empfang eines Telegramms zunächst geprüft wird, ob das empfangene Telegramm von einem autorisierten Netzwerkteilnehmer gesendet worden ist, zu welcher Überprüfung die Absenderkennung des empfangenen Telegramms mit dem in einer Liste in einem externen, nicht flüchtigen Speicherbaustein (7) abgelegten Absenderkennungen derjenigen Netzteilnehmer verglichen wird, die autorisiert sind, Daten an diesen Netzwerkteilnehmer (T) zu senden.

13. Verfahren nach Anspruch 12, **dadurch gekennzeichnet, dass** die Liste der Absenderkennungen derjenigen Netzwerkteilnehmer, die autorisiert sind, Daten an diesen Netzwerkteilnehmer (T) zu senden, in dem externen Speicherbaustein (7) in einem anderen Speichersegment (9) gespeichert wird als die Protokolleinträge.

## Claims

1. Network participant (T) of a building installation network, comprising a communication module (1), wherein the network participant is a sensor or an actuator, wherein the communication module (1) comprises a communication interface (2) and a processor unit (3) with a processor (4) and with a main memory (5) designed as a volatile memory, **characterized by the fact** that an external, non-volatile memory module (7) with a much higher memory volume compared to that of the main memory (5) is connected to the processor unit (3), to which memory module the processor unit (3) has access, that the number of log entries in the main memory (5) is limited, and that the communication module (1) has an emergency power store (10) supplying the processor unit (3) and the external memory module (7) with power, whose loading capacity is sufficient for memory operation of the processor unit (3) and the external memory module (7) for storing entries from the volatile main memory (5) into the external memory module (7).

2. Network participant in accordance with Claim 1, **characterized by the fact** that the main memory (5) is a RAM.

3. Network participant in accordance with Claim 1 or 2, **characterized by the fact** that the external memory module (7) is a flash memory module, for example a flash EEPROM.

4. Network participant in accordance with any of Claims 1 to 3, **characterized by the fact** that the power store (10) is a capacitor or a capacitor arrangement.

5. Network participant in accordance with any of Claims 1 to 4, **characterized by the fact** that entries from the main memory (5) of the processor unit (3) are stored in a first memory segment (8) of the external memory module (7) and a list of those network participants of the data network which are authorized to communicate with the communication module (1) is stored in a second memory segment (9).

6. Network participant in accordance with any of Claims 1 to 5, **characterized by the fact** that the communication interface (2) is an interface to a building installation network, for example a KNX interface.

7. Network participant in accordance with any of Claims 1 to 6, **characterized by the fact** that the external memory module (7) is arranged on the same circuit board as the processor unit (3).

8. Method for operating a network participant (T) in accordance with any of Claims 1 to 7, in which method the communication of other network participants with the communication module (1) of the network participant is logged in a main memory (5) designed as a volatile memory, by storing a log entry for each received telegram, **characterized by the fact** that
- when setting up the communication module (1), the number of protocol entries that can be stored in the main memory (5) is limited to a certain number,
- when the maximum number of log entries has been reached, at least the oldest log entry is transferred from the main memory (5) into a non-volatile memory module (7) and
- in the event of an interruption in the power supply to the communication module (1) or an unforeseen reset of the communication module (1), the latter continues to be supplied with power by an emergency power store (10) of limited capacity for as long as necessary to transfer all log entries from the main memory (5) into the non-volatile memory module (7).

9. Method in accordance with Claim 8, **characterized by the fact** that the log entries are transferred from the main memory (5) into an external, non-volatile memory module (7).

10. Method in accordance with Claim 8 or 9, **characterized by the fact** that when the communication module (1) is put into operation again after an interruption in the power supply or an unforeseen reset, the log entries stored in the external, non-volatile memory module (7) from the main memory (5) are loaded into the main memory (5) of the processor unit (3).

11. Method in accordance with any of Claims 8 to 10, **characterized by the fact** that the maximum number of log entries in the non-volatile memory module (7) is limited, the maximum number of these log entries being many times greater than the maximum permitted number of log entries in the main memory (5), and that when the maximum number of log entries in the memory module (7) is reached, at least the oldest log entry is deleted or transferred into a further memory located outside the network participant (T).

12. Method in accordance with any of Claims 8 to 11, **characterized by the fact** that on receipt of a telegram it is first checked whether the received telegram has been sent by an authorized network participant, for which check the sender identification of the received telegram is compared with the sender identifications of those network participants who are authorized to send data to this network participant (T) stored in a list in an external, non-volatile memory module (7).

13. Method in accordance with Claim 12, **characterized by the fact** that the list of sender identifications of those network participants who are authorized to send data to this network participant (T) is stored in the external memory module (7) in a different memory segment (9) than the log entries.

## Revendications

1. Participant de réseau (T) d'un réseau d'installation de bâtiment, comprenant un module de communication (1), le participant de réseau étant un capteur ou un actionneur, le module de communication (1) comprenant une interface de communication (2) et une unité de processeur (3) avec un processeur (4) et avec une mémoire vive (5) conçue comme mémoire volatile, **caractérisé en ce qu'**un module de mémoire (7) externe, non volatile, avec un volume de mémoire beaucoup plus élevé par rapport à celui de la mémoire vive (5), est relié à l'unité de processeur (3), auquel module de mémoire l'unité de processeur (3) a accès, **en ce que** le nombre d'entrées de journal dans la mémoire vive (5) est limité et **en ce que** le module de communication (1) comporte un accumulateur de secours (10) qui alimente en énergie l'unité de processeur (3) et le module de mémoire externe (7), dont la capacité de charge est suffisante pour le fonctionnement en mémoire de l'unité de processeur (3) et du module de mémoire externe (7) pour la mémorisation d'entrées de la mémoire vive volatile (5) dans le module de mémoire externe (7).

2. Participant de réseau selon la revendication 1, **caractérisé en ce que** la mémoire vive (5) est une RAM.

3. Participant de réseau selon la revendication 1 ou 2, **caractérisé en ce que** le module de mémoire externe (7) est un module de mémoire flash, par exemple une EEPROM flash.

4. Participant de réseau selon l'une des revendications 1 à 3, **caractérisé en ce que** l'accumulateur de secours (10) est un condensateur ou un agencement de condensateurs.

5. Participant de réseau selon l'une des revendications 1 à 4, **caractérisé en ce que** des entrées de la mémoire vive (5) de l'unité de processeur (3) sont stockées dans un premier segment de mémoire (8) du module de mémoire externe (7) et une liste des participants de réseau du réseau de données qui sont autorisés à communiquer avec le module de communication (1) est stockée dans un deuxième segment de mémoire (9).

6. Participant de réseau selon l'une des revendications 1 à 5, **caractérisé en ce que** l'interface de communication (2) est une interface vers un réseau d'installation de bâtiment, par exemple une interface KNX.

7. Participant de réseau selon l'une des revendications 1 à 6, **caractérisé en ce que** le module de mémoire externe (7) est disposé sur la même carte de circuit imprimé que l'unité de processeur (3).

8. Procédé d'exploitation d'un participant au réseau (T) selon l'une des revendications 1 à 7, dans lequel la communication d'autres participants au réseau avec le module de communication (1) du participant au réseau est enregistrée dans une mémoire vive (5) conçue comme une mémoire volatile, en mémorisant une entrée de journal pour chaque télégramme reçu, **caractérisé en ce que**
- lors de la configuration du module de communication (1), le nombre d'entrées de journal pouvant être mémorisées dans la mémoire vive (5) est limité à un nombre déterminé,
- après avoir atteint le nombre maximum d'entrées de journal, au moins l'entrée de journal la plus ancienne est transférée de la mémoire vive (5) à un module de mémoire non volatile (7) et
- en cas d'interruption de l'alimentation électrique du module de communication (1) ou de réinitialisation imprévue du module de communication (1), ce dernier continue à être alimenté en énergie aussi longtemps que nécessaire pour transférer toutes les entrées de journal de la mémoire vive (5) au module de mémoire non volatile (7).

9. Procédé selon la revendication 8, **caractérisé en ce que** les entrées de journal sont transférées de la mémoire vive (5) à un module de mémoire non volatile externe (7).

10. Procédé selon la revendication 8 ou 9, **caractérisé en ce que** lors de la remise en service du module de communication (1) après une interruption de l'alimentation électrique ou une réinitialisation imprévue, les entrées de journal mémorisées dans le module de mémoire (7) externe et non volatile de la mémoire vive (5) sont chargées dans la mémoire vive (5) de l'unité de processeur (3).

11. Procédé selon l'une des revendications 8 à 10, **caractérisé en ce que** le nombre maximum d'entrées de journal dans le module de mémoire non volatile (7) est limité, le nombre maximum de ces entrées de journal étant plusieurs fois supérieur au nombre maximum autorisé d'entrées de journal dans la mémoire vive (5), et **en ce que** lorsque le nombre maximum d'entrées de journal dans le module de mémoire (7) est atteint, au moins l'entrée de journal la plus ancienne est effacée ou transférée à une autre mémoire située en dehors du participant au réseau (T).

12. Procédé selon l'une des revendications 8 à 11, **caractérisé en ce qu**'à la réception d'un télégramme, on vérifie d'abord si le télégramme reçu a été envoyé par un participant au réseau autorisé, pour cette vérification l'identification d'émetteur du télégramme reçu est comparée aux identifications d'émetteur des participants du réseau qui sont autorisés à envoyer des données à cet participant au réseau (T), ces identifications d'émetteur étant mémorisées dans une liste dans un module de mémoire externe non-volatile (7).

13. Procédé selon la revendication 12, **caractérisé en ce que** la liste des identifications d'émetteur des participants du réseau qui sont autorisés à envoyer des données à cet participant du réseau (T) est mémorisée dans le module de mémoire externe (7) dans un autre segment de mémoire (9) que les entrées de journal.
